# EUROPEAN PATENT SPECIFICATION

(11) **EP 3 060 073 B1**
(45) Date of publication and mention of the grant of the patent: **10.04.2019**
(21) Application number: 14856135.0
(22) Date of filing: 06.10.2014
(51) Int. Cl.: A23L 27/30

(54) **D-PSICOSE IN ZERO OR LOW CALORIE FROZEN BEVERAGES**
D-PSICOSE IN KALORIENFREIEN ODER KALORIENARMEN GEFRORENEN GETRÄNKEN
D-PSICOSE DANS DES BOISSONS GLACÉES PEU OU PAS CALORIFIQUES

(30) Priority: 22.10.2013 US 201361894102 P
(43) Date of publication of application: 31.08.2016
(73) Proprietor: Pepsico, Inc., Purchase, NY 10577 (US)
(72) Inventor: LEE, Thomas, Scarsdale, New York 10583 (US); YEP, Gregory, New Canaan, Connecticut 06840 (US)
(74) Representative: Jenkins, Peter David
(86) International application number: PCT/US2014/059326
(87) International publication number: WO 2015/061028

(56) References cited:
- WO-A1-2008/112967
- US-A1- 2007 082 106
- US-A1- 2007 110 868
- US-A1- 2012 076 908
- US-B2- 7 579 032
- US-B2- 7 579 032

## Description

### FIELD OF THE INVENTION

The invention relates to the use of D-Psicose as Brix and bulking agents in zero, low, and reduced calorie frozen carbonated and non-carbonated beverages.

### BACKGROUND OF THE INVENTION

Among popular beverages are slushes and SLURPEES©. These frozen concoctions rely on ice and beverage syrup to create a drinkable frozen beverage. Such beverages may be carbonated or non-carbonated.

Frozen beverages require bulk solutes to stabilize small ice crystals and to trap carbon dioxide for a good taste and a smooth texture. The most commonly employed bulk solute is sugar. However, since sugar is caloric, it is not suitable for the formulation of zero- or low-calorie frozen beverages. Attempts have been made to prepare acceptable zero- or low-calorie frozen beverages; however, making such frozen beverages has been very difficult due to the need for effective bulk solutes for zero or low calorie beverages.

Some advances were made with the combination of erythritol and D-tagatose which provided the desired bulkiness to frozen carbonated beverages. These are the subject of U.S. Patent Nos. 7,579,032, 7,815,956, 8,221,815, and 8,227,006. The products described in these documents were successful in providing the desired bulkiness to the beverage, but the total Brix of the beverage remained low (-4.5 Brix) when compared to ∼15 Brix in full calorie frozen carbonated beverages.

Thus it is desired to provide zero- or low-calorie frozen beverages and reduced-calorie frozen beverages that provide not only the desired bulkiness but also a Brix closer to full calorie counterparts.

### BRIEF SUMMARY OF THE INVENTION

The present invention provides a frozen beverage according to claim 1. The frozen beverage is a zero- or low-calorie frozen beverage. In some embodiments the frozen beverage may further comprise one or more non-nutritive sweeteners. In some embodiments, the beverage may further comprise erythritol, D-Tagatose or both erythritol and D-Tagatose.

The present invention further provides a method of making a zero-, low-calorie or reduced-calorie frozen carbonated beverage according to claim 11.

Optional features of the frozen beverage and the method are defined in the dependent claims.

### DETAILED DESCRIPTION OF THE INVENTION

It was discovered that D-Psicose can add both Brix and bulkiness to zero- or low-calorie frozen beverages as well as reduced-calorie beverages. It was further discovered that compositions containing D-Psicose provided improved performance in frozen beverage machines. Aspects and embodiments of the present invention are therefore directed to the use of D-Psicose in frozen beverages.

Various examples and embodiments of the inventive subject matter disclosed here are possible and will be apparent to persons of ordinary skill in the art, given the benefit of this disclosure. As used in this disclosure, the phrases "certain embodiments," "certain exemplary embodiments," "exemplary embodiments" and similar phrases mean that those embodiments are merely non-limiting examples of the inventive subject matter and that alternative or different embodiments are not being excluded. Unless otherwise indicated or unless otherwise clear from the context in which it is described, alternative elements or features in the embodiments and examples below and in the Summary above are interchangeable with each other. That is, an element described in one example or embodiment may be interchanged or substituted for one or more corresponding element(s) described in another example. Similarly, optional or non-essential features disclosed in connection with a particular embodiment or example should be understood to be disclosed for use in any other embodiments of the disclosed subject matter. More generally, the elements of the examples and exemplary embodiments should be understood to be disclosed generally for use with other aspects, embodiments and examples of the devices and methods disclosed herein. A reference to a component or ingredient being operative, i.e., able to perform one or more functions, tasks and/or operations or the like, is intended to mean that it can perform the expressly recited function(s), task(s) and/or operation(s) in at least certain embodiments, and may well be operative to perform also one or more other functions, tasks and/or operations.

While this disclosure includes specific examples, including presently preferred modes or embodiments, those skilled in the art will appreciate that there are numerous variations and modifications within the scope of the invention as set forth in the appended claims. Each word and phrase used in the claims is intended to include all its dictionary meanings consistent with its usage in this disclosure and/or with its technical and industry usage in any relevant technology area. It should be understood that the term "about" is used throughout this disclosure and the appended claims to account for ordinary inaccuracy and variability, such as in measurement, testing and the like, in product production, etc.

As used in this disclosure, unless otherwise specified, the term "added" or "combined" and like terms means that the multiple ingredients or components referred to (e.g., oil, emulsifier, preservative, etc.) are combined in any manner and in any order, with or without stirring or the like, with or without heating, etc. For example, one or more ingredients can be dissolved into one or more other ingredients, or sprayed together, etc. As used here, a solution may be a true solution, a slurry, a suspension, or other form of liquid or flowable material. In certain embodiments, for example, materials may be said to be combined to form a homogenous solution. Certain aspects of the present invention pertain to stirring the liquids, beverages, beverage products and various other components described herein. The term "mixing," as used herein includes, but is not limited to, beating, blending, stirring, high shear stirring, low shear stirring, whipping, folding in, sonicating, sifting, pureeing, and the like.

Those of ordinary skill in the art will understand that in certain cases, for convenience, some ingredients are referred to or described here (including in the appended claims) by reference to the industry name for the product or to the original form of the ingredient in which it is used in formulating or producing the beverage or other food product. Such original form of the ingredient may differ from the form in which the ingredient is found in the finished beverage product. For example, the ingredient may be referred to in the form it is originally added during production of the food product rather than by the form it has in the finished food product, such as a dissolved or dissociated form or as a reaction product or complex with one or more of the other ingredients in the finished food product (or in an intermediate product in the course of producing the finished food product. Thus, for example, in certain exemplary embodiments of the beverage products according to this disclosure, sucrose and liquid sucrose would typically be substantially homogenously dissolved and dispersed in the comestible products. Likewise, other ingredients identified as a solid, concentrate (e.g., juice concentrate), etc. would typically be homogeneously dispersed throughout the beverage or throughout the beverage concentrate, rather than remaining in their original form. As another example, an ingredient described as a salt may exist in a beverage in dissolved form. Thus, reference to the form of an ingredient of a beverage product formulation should not be taken as a limitation on the form of the ingredient in the beverage product, but rather as a convenient means of describing the ingredient as an isolated component of the product formulation.

Certain aspects of this disclosure relate to the "concentration" of a solution, which is taken to mean the amount of solute in a given amount of solvent or solution. There are many ways to express concentration. For example, concentration may be defined in units of mass per unit volume (e.g., mg/mL, mg/cm³ and the like), percent by mass (which is simply the mass of the solute divided by the total mass of the solution multiplied by 100% (e.g., weight percent, percent by weight, wt. percent, wt. %, w/w, and the like)), percent by volume (which is simply the volume of the solute divided by the sum of the volumes of the other components multiplied by 100% (e.g., volume percent, percent by volume, v/v, and the like)), molarity (which is the number of moles of solute dissolved in one liter of solution), molality (which is the number of moles of solute dissolved in one kilogram of solvent), and parts per million (milligrams per liter).

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness.

Aspects of the invention are directed to the use of D-Psicose to increase Brix in zero- or low-calorie frozen beverages. D-Psicose is a non-caloric monosaccharide sugar. D-Psicose is desirable as it does not provide additional calories to a beverage composition. The invention is discussed generally in terms of zero- or low-calorie frozen beverages although the invention also relates to reduced calorie beverages which contain nutritive sweeteners in higher amounts than generally used in lower calorie beverages.

Desired Brix in zero- and low-calorie frozen beverages is generally 1 to 15, preferably or 10 to 15.

D-Psicose and D-tagatose are stereoisomers of D-fructose:

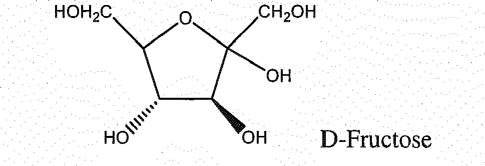

D-Fructose has a sweet intensity of 1.5x, provides 4 cal/g, and is FDA approved.

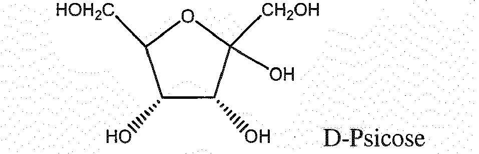

D-Psicose has a sweetness intensity of 0.6x, provides 0.2 cal/g, and is GRASed at a beverage max of 2.1 %.

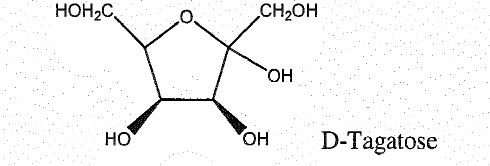

D-Tagatose has a sweetness intensity of 0.9x, provides 1.5 cal/g, and is GRASed at a beverage max of 1%.

D-Piscose provides a zero- or low-calorie frozen beverage composition that can be used successfully in frozen beverage machines. That is, frozen beverages can be prepared using the frozen beverage machine with more reliable performance and less maintenance.

For example, D-Psicose is currently GRASed with a 2.1 wt% max level. The inclusion of 2.1% D-Psicose in zero- or low-calorie frozen beverage compositions can increase the total Brix level of the frozen composition to 6.6% Brix without adding more calories. The increase in Brix allows the frozen beverage machine to work more reliably with less maintenance.

The amount of D-Psicose added to a frozen beverage composition depends in part of the non-nutritive sweetener and whether either erythritol or D-Tagatose are present in the composition. D-Psicose is added to the composition in an amount 2.1 wt% based on total weight of the finished frozen beverage.

D-Psicose may be used alone or together with erythritol, D-Tagatose, or both. Erythritol is generally added to the frozen beverage composition in an amount from 0.1 wt% to 4 wt% or 2 wt% to 3.5 wt%, based on total weight of the finished frozen beverage. D-Tagatose is generally added to the frozen beverage composition in an amount of from 0.1 wt% to 1.0 wt% or 0.3 wt% to 0.6 wt% based on total weight of the finished frozen beverage.

Frozen carbonated beverages in accordance with aspects of the present disclosure can be prepared directly as ready-to-drink frozen beverages or as syrup to be held in frozen beverage machines. For example, D-Psicose can be added to a sweetened or unsweetened base with stirring to achieve some or complete dissolution.

To prepare frozen beverages containing D-Psicose from a concentrate syrup, the pre-made syrup can be diluted with water, e.g. in a 1-plus-5 throw, to produce a beverage mixture. The beverage mixture can be poured into the hopper of a frozen beverage unit (e.g. a Taylor 428 or 430 frozen beverage unit or an Ultra I or Ultra II frozen beverage unit) to generate and dispense frozen beverage. Alternatively, the water and syrup can be combined at the point of dispensing. Optionally the frozen beverage can be flavored after being dispensed by adding flavored syrup.

Other types of frozen beverage machines include frozen carbonated beverage machines (optionally referred to here as an "FCB Dispenser") configured to hold syrup at reduced temperature and to add carbonated water to the syrup and dispense ready-to-drink frozen carbonated beverage at the time of consumption. Suitable FCB Dispensers are known to those skilled in the art and include, for example, the Cornelius V3 model and newer versions available from IMI Cornelius, Inc., a subsidiary of IMI plc.

For example, beverage syrup for frozen carbonated beverages can be prepared by adding D-Psicose to a sweetened or unsweetened carbonated soft drink ("CSD") base (e.g., cola CSD base or lemon-lime CSD base) or other beverage base with stirring to achieve some or complete dissolution. The D-Psicose is added at any suitable point, e.g., prior to or after adding other ingredients (such as sweeteners, acidulants, and preservatives) with stirring for partial or complete dissolution. The resulting syrup can be placed into a frozen carbonated beverage machine ("FCB Dispenser") configured to add carbonated water to the syrup before or at the time of dispensing servings of finished ready-to-drink frozen carbonated beverage. Ready-to-drink servings of finished frozen carbonated beverage should have good carbon dioxide overrun, smooth, creamy mouthfeel and good taste profile. Optionally frozen carbonated beverage syrup can be successively run through the FCB Dispenser to achieve consistently high quality ready-to-drink servings of finished frozen carbonated beverage.

The frozen beverage compositions in accordance with aspects of the invention contain D-Psicose and other suitable ingredients to form the frozen beverage compositions such as, but not limited to, water, nutritive and non-nutritive (natural or artificial) sweeteners, flavoring(s), acidulant(s), and preservative(s). Reduced calorie beverages may be prepared with higher quantities of nutritive sweeteners than zero calorie or lower calorie beverages.

The term "nutritive sweetener" refers generally to sweeteners which provide significant caloric content in typical usage amounts, e.g., more than about 5 calories per 8 oz. serving of beverage. As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar.

As used herein, a "full-calorie" beverage formulation is one fully sweetened with a nutritive sweetener. As used herein, "reduced calorie beverage" means a beverage having at least a 25% reduction in calories per 8 oz. serving of beverage as compared to the full calorie version, typically a previously commercialized full-calorie version. In at least certain embodiments, a reduced calorie beverage has about a 50% reduction in calories per 8 oz. serving as compared to the full calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed.

Non-nutritive sweeteners suitable for use in the present invention include, without limitation, peptide based sweeteners, for example, aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Natural non-nutritive sweeteners suitable for use in at least certain embodiments as a supplementary sweetener for the D-Psicose include, for example, other steviol glycosides (e.g., stevioside, steviolbioside, dulcoside A, rebaudioside A, rebaudioside B, rebaudioside C, rebaudioside D, rebaudioside E, rebaudioside M, mixtures of any of them, etc.), Lo Han Guo and related compounds. Other sweeteners include glycyrrhizin, neohesperidin dihydrochalcone, monatin, thaumatin, monellin, brazzein, L-alanine, glycine, hernandulcin, phyllodulcin, trilobatin, or a combinations of any two or more of them.

Steviol glycosides include rebaudiosides, e.g., rebaudioside A, rebaudioside D, rebaudioside M, stevioside, steviolbioside, dulcoside A, or mixtures of any two or more of them can be used for sweetening in combination with D-Psicose in the zero- or low-calorie frozen beverage products disclosed here. These compounds may be synthetically produced (e.g., chemically or by fermentation of genetically modified organisms, etc.) or obtained by extraction or the like from the stevia plant (e.g., by extraction followed by enzymatic conversion). Stevia (e.g., *Stevia rebaudiana* Bertoni) is a commercially cultivated, sweet-tasting plant. The leaves contain a complex mixture of natural sweet diterpene glycosides. Steviol glycosides and rebaudiosides are components of Stevia that contribute various degree of sweetness. A, rebaudioside B, rebaudioside C, rebaudioside D, rebaudioside E, stevioside.

Processes for the preparation of certain rebaudiosides, including, e.g., rebaudioside D, rebaudioside M, and others, is shown in PCT patent application No. 104002121 filed December 10, 2012 by Su Zhou Jing Hong Biotech Co., Ltd. (Wujiang, Jiangsu Province, People's Republic Of China) and corresponding U.S. provisional patent application No. 61/579,016 filed December 22, 2011.

One of ordinary skill in this art will readily appreciate that non-nutritive sweeteners may be used or combined in various ratios to form a non-nutritive sweetener blend suitable for use in the present invention. Precise ratios of non-nutritive sweeteners depend on the combination of sweeteners used in a given blend and the desired overall sweetness for a given application. Appropriate ratios can be readily determined by one of ordinary skill in this art. One of ordinary skill in this art will also readily appreciate that the amount of the non-nutritive sweetener in a finished frozen beverage will vary depending on a variety of factors such as the desired overall sweetness for a given application. Appropriate amounts can be readily determined by one of ordinary skill in this art.

It is additionally possible to include in a beverage, a combination of D-Psicose and at least one nutritive sweetener in order to achieve good tasting reduced-calorie frozen beverage. Any nutritive sweetener is suitable for use; as used herein, a "nutritive" sweetener is one which provides significant caloric content in typical usage amounts, i.e., more than about 1 calorie per serving (8 oz. for beverages). Such sweeteners include, without limitation, fructose, sucrose, dextrose, maltose, trehalose, rhamnose, corn syrups (e.g. high fructose corn syrup) and fructo-oligosaccharides.

It should be understood that compositions and beverages in accordance with this disclosure may have any of numerous different specific formulations or constitutions. The formulation may vary depending upon such factors as the product's intended market segment, its desired nutritional characteristics, flavor profile and the like. Flavorings, electrolytes, vitamins, fruit juices or other fruit products, tastents, masking agents and the like, flavor enhancers, and/or carbonation typically may be added to any such formulations to vary the taste, mouthfeel, nutritional characteristics, etc.

In general, a frozen beverage product in accordance with this disclosure typically comprises at least water, D-Psicose, acidulant and flavoring. Exemplary flavorings which may be suitable for at least certain formulations in accordance with this disclosure include cola flavoring, citrus flavoring, spice flavorings and others. Carbonation in the form of carbon dioxide may be added for effervescence. Preservatives may be added if desired, depending upon the other ingredients, production technique, desired shelf life, etc. Optionally, caffeine may be added. Certain exemplary embodiments of the beverages disclosed here are cola-flavored carbonated beverages, characteristically containing carbonated water, sweetener, kola nut extract and/or other flavoring, caramel coloring, at least one acid, and optionally other ingredients. Additional and alternative suitable ingredients will be recognized by those skilled in the art given the benefit of this disclosure.

In the frozen beverages of the present invention, it is possible to include other ingredients typically found in such beverages. Such other ingredients include, without limitation, soluble low-calorie fibers such as polydextrose, Fibersolg, or arabinogalactan, chitosan, chitin, xanthan, pectin, cellulosics, konjac, gum arabic, modified starch, soy fiber, inulin, inulose, hydrolyzed guar, guar gum, beta-glucan, carageenan, locust bean gum, alginate, polyglycol alginate, foam stabilizing agents such as yucca or yucca/quillaia extracts, salts such as sodium, calcium and potassium chlorides, food grade surfactants such as monoglycerides, diglycerides, lecithin and fractions thereof, and synthetic surfactants such as Tweens.RTM., Spans.RTM., diacetyltartaric esters, citric acid esters, etc.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least:
absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR §170.3(o)(24)) are considered incidental additives and may be used if removed appropriately.

Substantially clear embodiments of the beverage products disclosed here are substantially clear in that the beverages have substantially no turbidity and substantially no color.

Water is a basic ingredient in the products disclosed here typically being the vehicle or primary liquid portion in which the D-Psicose is provided and the remaining ingredients in the beverage products are dissolved, emulsified, suspended or dispersed. Purified water can be used in the manufacture of certain embodiments of the beverage products disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments of beverage products, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water," "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

As discussed above, sweeteners suitable for combination with D-Psicose in at least certain exemplary embodiments of beverage products disclosed here include natural nutritive sweeteners, natural non-nutritive potent sweeteners, and artificial sweeteners. Also, in at least certain exemplary embodiments of the beverage products disclosed here, combinations of one or more natural nutritive sweeteners, one or more artificial sweeteners and/or one or more natural non-nutritive potent sweeteners are used to provide the sweetness and other aspects of desired taste profile and nutritive characteristics. It should also be recognized that certain such sweeteners will, either in addition or instead, act as tastents, masking agents or the like in various embodiments of the beverages disclosed here, e.g., when used in amounts below its (or their) sweetness perception threshold in the beverage in question.

The sweeteners included in the formulations of the beverage products disclosed here, including are edible consumables suitable for consumption and for use in beverages. By "edible consumables" is meant a beverage or an ingredient of a beverage for human or animal consumption. The sweetener or sweetening agent used here and in the claims may be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

pH is a measure of the acidity or basicity of a solution. As used herein, the term "low pH" refers to an acidic pH below pH 6, such as in the range of about 1 to about 6. Certain exemplary embodiments of the beverages disclosed here (e.g., cola beverage products) have a pH in the range of about 2.0 to 5.0, or in the range of about 2.5 to 4.0, or in the range of about 2.8 to 3.3 or in the range of about 3.0 to 3.2. As used herein, the term "high pH" refers to a basic pH in the range of about 8 to about 14. As used herein, the term "neutral pH" refers to a pH of about 7 (e.g., from about 6.0 to 8.0., or in the range of about 6.5 to about 7.5). Certain exemplary embodiments of the beverages disclosed here have a high pH, e.g., a pH in the range of about pH 8 to 14. Certain exemplary embodiments of the beverage products disclosed here have a neutral pH, e.g., a pH in the range of about pH 6 to pH 8, or in the range of about pH 6.5 to 7.5.

An acidulant comprising at least one edible acid is used in certain embodiments of the beverage products disclosed herein and may serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric acid, malic acid, tartaric acid, lactic acid, fumaric acid, ascorbic acid, gluconic acid, succinic acid, maleic acid, adipic acid, cinnamic acid, glutaric acid, and mixtures of any of them. Typically, the acid is phosphoric acid, citric acid, malic acid, or combinations of any of them, such as, e.g., phosphoric acid and citric acid. In embodiments comprising natural beverage products (e.g., natural cola beverage products), the acid can be selected, e.g., from the group consisting of citric acid, malic acid, tartaric acid, formic acid, gluconic acid, lactic acid, fumaric acid, adipic acid, succinic acid, maleic acid, cinnamic acid, glutaric acid, and mixtures of any of them. For instance, in certain embodiments the acid comprises or consists essentially of lactic acid, tartaric acid and citric acid, and in certain embodiments the acid comprises or consists essentially of lactic acid and at least one of tartaric and citric acids.

Titratable acidity is an indication of the total acidity of a beverage product. Titratable acidity measures the amount of alkali required to neutralize the acid of a given volume of beverage. The titratable acidity is the milliliter of 0.1 N NaOH required to titrate 100 ml of beverage to a pH 8.75 end point with a potentiometer. The titratable acidity of certain embodiments of the beverage products disclosed here (e.g., cola beverage products) and at least one acid is typically about 8.75 to about 12.5, or from about 9 to about 11. Suitable titratable acidities include, e.g., about 9, 9.25, 9.5, 9.75, 10, 10.25, or 10.9.

The acid may be used in solution form, for example, and in an amount sufficient to provide the desired pH of the beverage. The particular acid or acids chosen and the amount used will depend, in part, on the other ingredients, the desired shelf life of the beverage product, as well as effects on the beverage pH, titratable acidity, and taste. Typically, for example, the one or more acids of the acidulant are used in an amount, collectively, of from about 0.01% to about 1.0% by weight of the beverage, e.g., from about 0.01% to about 0.5% by weight, from about 0.05% to about 0.5% by weight, from about 0.05% to about 0.25% by weight, from about 0.1% to about 0.25% by weight, depending upon the acidulant used, desired pH, other ingredients used, etc., of the beverage product (e.g., a cola beverage product). The pH of at least certain exemplary embodiments of the beverages disclosed here may be a value within the range of from about 2.0 to 5.0, about 2.5 to 4.0, about 2.8 to 3.3 or about 3.0 to 3.2., e.g., 3.1. The acid in certain exemplary embodiments enhances beverage flavor. Too much acid may impair the beverage flavor and result in tartness or other off-taste, while too little acid may make the beverage taste flat.

Those skilled in the art, given the benefit of this disclosure, will recognize that when preparing beverage products containing sweeteners such as peptide-based artificial sweeteners, such as aspartame, the resulting beverage composition is best maintained at a suitable pH. Specifically, the pH/stability curve for aspartame is a bell curve with pH 4.2 generally providing the best stability or shelf life. More specifically, such pH values are generally found to best retain the sweetening effect of the artificial sweetener.

In the formation of calcium-supplemented beverages, the presence of calcium salt(s) may require additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents, e.g., to adjust pH or for other purposes. Such agents include, e.g., potassium citrate and sodium citrate. For example, the alkaline agent potassium hydroxide may be used in an amount of from about 0.005 wt.% to about 0.02 wt.% (by weight of the beverage), with an amount of about 0.01% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but fruit commonly accepted as such. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime grapefruit, tangerine, mandarin orange, tangelo, and pomelo, and such flavors as apple, grape, cherry, and pineapple flavors and the like, and mixtures thereof. In certain exemplary embodiments the beverage concentrates and other beverage products comprise a fruit flavor component, e.g., a juice concentrate or juice. As used here, the term "botanical flavor" refers to flavors derived from parts of a plant other than the fruit. As such, botanical flavors may include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component may further comprise a blend of several of the above-mentioned flavors. In certain exemplary embodiments of the beverage concentrates and beverages a cola flavor component is used or a tea flavor component. The particular amount of the flavor component useful for imparting flavor characteristics to the beverage products of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices may be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices may be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, cashew apple, pomegranate, persimmon, mango, rhubarb, papaya, litchi, lemon, orange, lime, tangerine, mandarin and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice may be used, if at all, in an amount of from about 1% to about 20% by weight.

Certain such juices which are lighter in color may be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices may be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings may be in the form of an extract, oleoresin, juice concentrate, bottler's base, or other forms known in the art. In at least certain exemplary embodiments, such spice or other flavors complement that of a juice or juice combination.

The one or more flavorings may be used in the form of an emulsion. A flavoring emulsion may be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the beverages disclosed here. Any of the techniques and carbonating equipment known in the art for carbonating beverages may be employed. Carbon dioxide may enhance the beverage taste and appearance and may aid in safeguarding the beverage purity by inhibiting and destroying objectionable bacteria. In certain embodiments, for example, the beverage has a CO₂ level up to about 4.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of liquid, e.g., water at 60° F (16° C) and one atmospheric pressure. A volume of gas occupies the same space as does the liquid by which it is dissolved. The carbon dioxide content may be selected by those skilled in the art based on the desired level of effervescence and the impact of the carbon dioxide on the taste or mouthfeel of the beverage. The carbonation may be natural or synthetic.

Optionally, caffeine may be added to various embodiments of the beverage products disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of purity acceptable for use in foods and beverages. The caffeine may be natural or synthetic in origin.

The frozen beverage compositions disclosed here may contain additional ingredients compatible with D-Psicose, including, generally, any of those typically found in comestible formulations. These additional ingredients, for example, may typically be added to a stabilized beverage composition. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations of any of them. The optional non-mineral nutritional supplements are typically present in amounts generally accepted under good manufacturing practices. Exemplary amounts are between about 1% and about 100% RDV (recommended daily value), where such RDV are established. In certain exemplary embodiments the non-mineral nutritional supplement ingredient(s) are present in an amount of from about 5% to about 20% RDV, where established.

Preservatives may be used in at least certain embodiments of the frozen beverage products disclosed here. That is, at least certain exemplary embodiments contain an optional preservative system. For example, solutions with a pH below 4 and especially those below 3 typically are "microstable," i.e., they resist growth of microorganisms, and so are suitable for longer term storage prior to consumption without the need for further preservatives. However, an additional preservative system may be used if desired. If a preservative system is used, it may be added to the beverage product at any suitable time during production, e.g., in some cases prior to the addition of d-Psicose. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations of any of them. Preservatives may be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of food or beverage preservation suitable for at least certain exemplary embodiments of the beverage products disclosed here (e.g., cola beverage products) include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

The examples which follow are intended as an illustration of certain preferred embodiments of the invention, and no limitation of the invention is implied.

### Example 1

To a gallon of unsweetened Diet Pepsi base, D-Psicose (10% by weight of finished drink) is added, and the solution is stirred until complete dissolution occurs. Rebaudioside M (400 ppm per finished drink) is then added, and again the solution is stirred until complete dissolution. The syrup thus prepared is placed into a frozen carbonated beverage machine (for example, Cornelius V3) in a 1 plus 5 throw (1 part syrup with 5 parts carbonated water). The resulting FCB has good carbon dioxide overrun, smooth, creamy mouthfeel and great taste. In addition, the syrup can be successively run through the FCB machine to consistently achieve a high quality FCB.

### Example 2

Example 1 is repeated with the following: D-Psicose is 5%, erythritol is 3.5%, Rebaudioside M is 200 ppm.

### Example 3

Example 1 is repeated with the following: D-Psicose 2.1%, erythritol 3.5%, sugar 3%, and Rebaudioside M is 200 ppm.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

## Claims

1. A frozen beverage comprising (a) rebaudioside M and (b) 2.1 wt% D-Psicose based on total weight of the frozen beverage, wherein the frozen beverage has a total Brix level of at least 6.6 percent and wherein the frozen beverage is a zero-, low-calorie, or reduced-calorie beverage.

2. The frozen beverage of claim 1, further comprising one or more nutritive sweeteners.

3. The frozen beverage according to claim 1 or claim 2 further comprising erythritol, D-tagatose , or both erythritol and D-tagatose.

4. The frozen beverage according to any one of claims 1-3, comprising the erythritol in an amount from 0.1 wt% to 4 wt% based on the total weight of the frozen beverage and/or the D-tagatose in an amount from 0.1 wt% to 1 wt% based on the total weight of the frozen beverage.

5. The frozen beverage according to any one of claims 1-4, further comprising a non-nutritive sweetener selected from the group consisting of steviol glycosides, aspartame, acesulfame salts, saccharins, cyclamates, sucralose, alitame, neotame, glycyrrhizin, Lo Han Guo, neohesperidin dihydrochalcone, monatin, monellin, thaumatin and brazzein.

6. The frozen beverage according to any one of claims 1-5, further comprising a non-nutritive sweetener selected from the group consisting of Rebaudioside A, Rebaudioside D, and combinations thereof.

7. The frozen beverage according to any one of claims 1-6, wherein the frozen beverage is a frozen carbonated beverage, a frozen soft drink, a frozen fruit juice, or a frozen fruit juice flavored beverage.

8. The frozen beverage according to any one of claims 1-7, wherein the frozen beverage is a cola or lemon-lime soft drink.

9. The frozen beverage according to any one of claims 1-8 having a calorie content of less than 5 calories per 8 oz serving of the frozen beverage or having a calorie content of less than 40 calories per 8 oz serving of the frozen beverage.

10. The frozen beverage according to any one of claims 2-9, wherein the nutritive sweetener is sucrose or high fructose corn syrup.

11. A method of making a zero-, low-calorie, or reduced-calorie frozen carbonated beverage comprising the steps of: (1) combining (a) rebaudioside M and (b) D-Psicose to prepare a zero-, low-calorie, or reduced-calorie frozen carbonated beverage syrup; (2) loading the zero-, low-calorie, or reduced-calorie frozen carbonated beverage syrup into a frozen carbonated beverage dispensing machine; and (3) dispensing a zero-, low-calorie, or reduced-calorie frozen carbonated beverage from the frozen carbonated beverage dispensing machine, wherein the beverage contains D-Psicose in an amount of 2.1 wt% based on total weight of the frozen beverage and wherein the frozen beverage has a total Brix level of at least 6.6 percent.

12. The method according to claim 11 , further comprising running the zero-, low-calorie, or reduced-calorie frozen carbonated beverage through the frozen carbonated beverage dispensing machine at least three times.

13. The method according to claim 11 or claim 12, further comprising adding a nutritive sweetener to the zero-, low-calorie, or reduced-calorie beverage syrup.

## Patentansprüche

1. Gefrorenes Getränk, das (a) Rebaudiosid M und (b) 2,1 Gew.-% D-Psicose, bezogen auf das Gesamtgewicht des gefrorenen Getränks, umfasst, wobei das gefrorene Getränk einen Brix-Gesamtwert von mindestens 6,6 Prozent aufweist und wobei das gefrorene Getränk ein kalorienfreies, kalorienarmes oder kalorienreduziertes Getränk ist.

2. Gefrorenes Getränk nach Anspruch 1, das weiterhin einen oder mehrere Zuckeraustauschstoffe umfasst.

3. Gefrorenes Getränk nach Anspruch 1 oder 2, das weiterhin Erythrit, D-Tagatose oder sowohl Erythrit als auch D-Tagatose umfasst.

4. Gefrorenes Getränk nach einem der Ansprüche 1-3, das das Erythrit in einer Menge von 0,1 Gew.-% bis 4 Gew.-%, bezogen auf das Gesamtgewicht des gefrorenen Getränks, und/oder die D-Tagatose in einer Menge von 0,1 Gew.-% bis 1 Gew.-%, bezogen auf das Gesamtgewicht des gefrorenen Getränks, umfasst.

5. Gefrorenes Getränk nach einem der Ansprüche 1-4, das weiterhin einen Nicht-Zuckeraustauschstoff umfasst, der aus der Gruppe bestehend aus Steviolglycosiden, Aspartam, Acesulfamsalzen, Saccharinen, Cyclamaten, Sucralose, Alitam, Neotam, Glycyrrhizin, Luo Han Guo, Neohesperidindihydrochalcon, Monatin, Monellin, Thaumatin und Brazzein ausgewählt ist.

6. Gefrorenes Getränk nach einem der Ansprüche 1-5, das weiterhin einen Nicht-Zuckeraustauschstoff umfasst, der aus der Gruppe bestehend aus Rebaudiosid A, Rebaudiosid D und Kombinationen davon ausgewählt ist.

7. Gefrorenes Getränk nach einem der Ansprüche 1-6, wobei das gefrorene Getränk ein gefrorenes kohlensäurehaltiges Getränk, ein gefrorenes Erfrischungsgetränk, ein gefrorener Fruchtsaft oder ein gefrorenes Getränk mit Fruchtsaftgeschmack ist.

8. Gefrorenes Getränk nach einem der Ansprüche 1-7, wobei das gefrorene Getränk ein Cola- oder Zitronen-Limetten-Erfrischungsgetränk ist.

9. Gefrorenes Getränk nach einem der Ansprüche 1-8 mit einem Kaloriengehalt von weniger als 5 Kalorien pro 8-oz-Portion des gefrorenen Getränks oder mit einem Kaloriengehalt von weniger als 40 Kalorien pro 8-oz-Portion des gefrorenen Getränks.

10. Gefrorenes Getränk nach einem der Ansprüche 2-9, wobei der Zuckeraustauschstoff Saccharose oder Maissirup mit hohem Fruktosegehalt ist.

11. Verfahren zur Herstellung eines kalorienfreien, kalorienarmen oder kalorienreduzierten gefrorenen Getränks, das die folgenden Schritte umfasst: (1) Kombinieren von (a) Rebaudiosid M und (b) D-Psicose zum Herstellen eines kalorienfreien, kalorienarmen oder kalorienreduzierten gefrorenen kohlensäurehaltigen Getränkesirups; (2) Füllen des kalorienfreien, kalorienarmen oder kalorienreduzierten gefrorenen kohlensäurehaltigen Getränkesirups in einen Automaten zur Ausgabe eines gefrorenen kohlensäurehaltigen Getränks und (3) Ausgeben eines kalorienfreien, kalorienarmen oder kalorienreduzierten gefrorenen kohlensäurehaltigen Getränks aus dem Automaten zur Ausgabe eines gefrorenen kohlensäurehaltigen Getränks, wobei das Getränk D-Psicose in einer Menge von 2,1 Gew.-%, bezogen auf das Gesamtgewicht des gefrorenen Getränks, umfasst und wobei das gefrorene Getränk einen Brix-Gesamtwert von mindestens 6,6 Prozent aufweist.

12. Verfahren nach Anspruch 11, das weiterhin ein mindestens dreimaliges Laufenlassen des kalorienfreien, kalorienarmen oder kalorienreduzierten gefrorenen kohlensäurehaltigen Getränks durch den Automaten zur Ausgabe eines gefrorenen kohlensäurehaltigen Getränks umfasst.

13. Verfahren nach Anspruch 11 oder 12, das weiterhin ein Zugeben eines Zuckeraustauschstoffs zu dem kalorienfreien, kalorienarmen oder kalorienreduzierten gefrorenen Getränkesirup umfasst.

## Revendications

1. Boisson glacée comprenant (a) du rébaudioside M et (b) 2,1 % en poids de D-psicose sur la base du poids total de la boisson glacée, dans lequel la boisson glacée a un niveau total de Brix d'au moins 6,6 % et dans lequel la boisson glacée est une boisson peu ou pas calorifique, ou à calories réduites.

2. Boisson glacée selon la revendication 1, comprenant en outre un ou plusieurs édulcorants nutritifs.

3. Boisson glacée selon, soit la revendication 1, soit la revendication 2, comprenant en outre de l'érythritol, du D-tagatose, ou de l'érythritol et du D-tagatose.

4. Boisson glacée selon l'une quelconque des revendications 1 à 3, comprenant de l'érythritol dans une proportion de 0,1 % en poids à 4 % en poids sur la base du poids total de la boisson glacée et/ou du D-tagatose dans une proportion de 0,1 % en poids à 1 % en poids sur la base du poids total de la boisson glacée.

5. Boisson glacée selon l'une quelconque des revendications 1 à 4, comprenant en outre un édulcorant non nutritif sélectionné dans le groupe constitué de glycosides de stéviol, d'aspartame, de sels d'acésulfame, de saccharines, de cyclamates, de sucraloses, d'alitame, de néotame, de glycyrrhizine, de Luo Han Guo, de néohespéridine dihydrochalcone, de monatine, de monelline, de thaumatine et de brazzéine.

6. Boisson glacée selon l'une quelconque des revendications 1 à 5, comprenant en outre un édulcorant non nutritif sélectionné dans le groupe constitué de rébaudioside A, de rébaudioside D ou d'une combinaison de ceux-ci.

7. Boisson glacée selon l'une quelconque des revendications 1 à 6, dans lequel la boisson glacée est une boisson glacée gazeuse, une boisson glacée sans alcool, un jus de fruit glacé ou un boisson glacée aromatisée aux fruits.

8. Boisson glacée selon l'une quelconque des revendications 1 à 7, dans lequel la boisson glacée est une boisson sans alcool à base de cola ou une boisson sans alcool à base de citron-limette.

9. Boisson glacée selon les revendications 1 à 8 ayant une teneur calorifique inférieure à 5 calories par portion de boisson glacée de 8 onces (226,7962 g) ou ayant une teneur calorifique inférieure à 40 calories par portion de boisson glacée de 8 onces (226,7962 g).

10. Boisson glacée selon l'une quelconque des revendications 2 à 9, dans lequel l'édulcorant nutritif est du sucrose ou du sirop de maïs riche en fructose.

11. Procédé de fabrication d'une boisson glacée gazeuse peu ou pas calorifique, ou à calories réduites consistant à :
(1) combiner (a) du rébaudioside M et (b) du D-psicose pour préparer un sirop de boisson glacée gazeuse peu ou pas calorifique, ou à calories réduites.;
(2) charger le sirop de boisson glacée gazeuse peu ou pas calorifique, ou à calories réduites dans un distributeur de boissons glacées gazeuses ; et
(3) distribuer une boisson glacée gazeuse peu ou pas calorifique, ou à calories réduites, du distributeur de boissons glacées gazeuses, dans lequel la boisson contient du D-psicose dans une proportion de 2,1 % en poids sur la base du poids total de la boisson glacée et dans lequel la boisson glacée a un niveau de Brix d'au moins 6,6 %.

12. Procédé selon la revendication 11, consistant en outre à faire passer la boisson glacée gazeuse peu ou pas calorifique, ou à calories réduites dans le distributeur de boissons glacées gazeuses au moins à trois reprises.

13. Procédé selon, soit la revendication 11, soit la revendication 12, comprenant en outre l'ajout d'un édulcorant nutritif au sirop de boisson glacée gazeuse peu ou pas calorifique, ou à calories réduites.
